(19) Europäisches Patentamt
European Patent Office
Office européen des brevets

(11) Publication number: 0 297 696 B1

(12) **EUROPEAN PATENT SPECIFICATION**

(45) Date of publication of patent specification: **15.04.92**

(51) Int. Cl.5: **C09D 133/08**, C09D 163/00, C08F 283/10, C08G 59/56

(21) Application number: **88303245.0**

(22) Date of filing: **12.04.88**

(54) **Rapid curing weather resistant epoxy coating.**

(30) Priority: **29.06.87 US 67074**

(43) Date of publication of application:
**04.01.89 Bulletin 89/01**

(45) Publication of the grant of the patent:
**15.04.92 Bulletin 92/16**

(84) Designated Contracting States:
**BE DE ES FR NL SE**

(56) References cited:
**EP-A- 0 200 397**
**US-A- 3 943 104**
**US-A- 4 051 195**

(73) Proprietor: **TEXACO DEVELOPMENT CORPORATION**
**2000 Westchester Avenue**
**White Plains, New York 10650(US)**

(72) Inventor: **Waddill, Harold George**
**7108 Geneva Circle**
**Austin Texas 78723(US)**

(74) Representative: **Brock, Peter William et al**
**UROUHART-DYKES & LORD 91 Wimpole Street**
**London W1M 8AH(GB)**

EP 0 297 696 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

1. Field of the Invention

The invention relates to improved rapid curing, weatherable epoxy coatings.

2. Description of Other Relevant Materials in the Field

Cycloaliphatic epoxy resins prepared by the hydrogenation of glycidyl ethers of bisphenol A or other di- or polyphenols may be reacted with selective curatives to form coatings that are resistant to UV degradation. Cycloaliphatic epoxy resins are prepared by the process described in U. S. Patent No. 3,336,241. These resins are much less reactive with conventional epoxy curatives than are the phenolic-based glycidyl ethers.

U. S. Patent No. 4,051,195 to W. F. McWhorter teaches curable epoxy resin compositions comprising (1) a blend of an epoxide resin and a polyacrylate or polymethacrylate ester of a polyol wherein the ester contains more than one terminal acrylate or methacrylate and (2) an aliphatic polyamine curing agent. The weight ratio of epoxide resin: ester is 100:5 to 100:100. The aliphatic polyamine is incorporated into the resin composition in a specified amount. The epoxy resin compositions are said to cure rapidly even at low temperature and are useful as coatings and adhesives.

U. S. Patent No. 4, 528,345 to H. G. Waddill teaches a method for making weather-resistant epoxy coatings. The method comprises prereacting a cycloaliphatic diepoxide resin with aminoethylpiperazine or a mixture of aminoethylpiperazine and polyoxyalkylenepolyamine in an amount which is balanced to give the maximum level of primary amine reaction with yielding an excessively viscous reaction product. The prereacted product is reacted with a curing amount of a polyoxyalkylene polyamine and an accelerator.

U. S. Patent No. 3,875,072 to H. G. Waddill teaches an accelerator for curing epoxy resins. The accelerator comprises piperazine and an alkanolamine in a weight ratio of 1:8 to 1:1. A number of alkanolamines are taught. The product comprising 10-20% piperazine, 5-10% N-aminoethylpiperazine and 60-80% triethanolamine is sold commercially as Accelerator 399 by Texaco Chemical Co. The accelerator is said to be synergistic for accelerating the curing of a polyglycidyl ether of a polyhydric phenol cured with a polyoxyalkylene polyamine at ambient or elevated temperatures. Such amines include polyoxypropylene diamines of the formula:

$NH_2CH(CH_3)CH_2[OCH_2CH(CH_3)]_xNH_2$

wherein x ranges from 2 to 40. Such amines also include polyoxypropylene triamines of the formula:

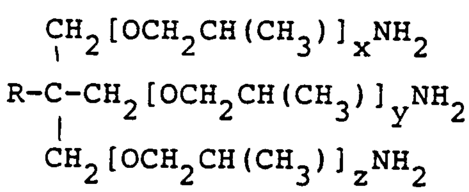

wherein R is a lower alkyl and x + y + z ranges from 3 to 40.

These diamines and triamines may be synthesized according to U. S. Patent No. 3,654,370 to E. L. Yeakey which teaches a method comprising a nickel, copper and chromium catalyst for aminating polyols.

U. S. Patent No. 4,588,788 teaches the esterification products of a mixture of carboxylic acids of the formula

$CH_2 = CHCO_2(CH_2CH_2CO_2)_nH$.

This product and a mono- or polyhydric compound are used as reactive diluents for polyepoxides which are reacted with an aliphatic amine curing agent.

SUMMARY OF THE INVENTION

The invention is an epoxy resin coating composition. The epoxy component comprises a mixture of a cycloaliphatic epoxy resin containing at least 1.8 reactive 1,2-epoxy groups per molecule and an acrylate ester in a weight ratio of 2:1 to 10:1. The curative component comprises a curing amount of a polyether polyamine. The curative additionally comprises a piperazine accelerator in molar equivalence with the acrylate ester.

The two components are reacted and cured to form an attractive, weatherable, non-yellowing coating free of surface blemishes.

## DESCRIPTION OF THE PREFERRED EMBODIMENTS

The invention is an improvement in U. S. Patent No. 4,051,195 to W. R. McWhorter, incorporated herein by reference.

An improved epoxy formulation has been developed which cures rapidly to form attractive, blemish-free, high-gloss coatings. The formulation comprises a blend of a cycloaliphatic epoxy resin and an acrylate ester, cured with a mixture of a polyether polyamine and a reactive amine accelerator derived from piperazine.

It has been found that the addition of piperazine to the acrylate ester-epoxy resin system of U. S. Patent No. 4,051,195 shortened drying time and promoted rapid curing of the epoxy resin with the selected polyether polyamines demonstrated in the Example.

The cycloaliphatic epoxy resins useful in the invention are those, for example, which are made by the process disclosed in U. S. Patent No. 3,336,241. Preferred cycloaliphatic epoxy resins are the hydrogenated glycidyl ethers of 2,2-bis(4-hydroxyphenyl) propane which is then called 2,2-bis(4-hydroxycyclohexyl) propane. Other cycloaliphatic epoxy resins such as those described in U. S. Patent No. 3,336,241 may also be used by those skilled in the art using the invention described herein to effect weather-resistant epoxy coatings.

The acrylate esters useful in this invention are those esters which contain more than one terminal acrylate or methacrylate group. These esters include the acrylic and methacrylic acid esters of aliphatic polyhydric alcohols such as, for example, the di- and polyacrylates and the di- and polymethacrylates of alkylene glycols, alkoxylene glycols, alicyctic glycols and higher polyols, such as ethylene glycol, triethylene glycol, tetraethylene glycol, tetramethylene glycol, hexanediol, trimethylolethane, trimethylolpropane, pentaerythritol, dipentaerythritol, tripentaerythritol and the like, or mixtures of these with each other or with their partially esterified analogs.

Typical compounds include but are not limited to trimethylolpropane triacrylate, trimethylolethane triacrylate, trimethylolpropane trimethacrylate, trimethylolethane trimethacrylate, tetramethylene glycol dimethacrylate, ethylene glycol dimethyacrylate, triethylene glycol dimethacrylate, pentaerythritol triacrylate, pentaerythritol tetraacrylate, 1,6-hexanediol diacrylate, 1,6-hexanediol dimethacrylate, dipentaerythritol tetraacrylate, dipentaerythritol pentaacrylate, and the like. Particularly preferred esters are 1,6-hexanediol diacrylate, trimethylolpropane triacrylate, pentaerythritol triacrylate, and pentaerythritol tetraacrylate.

The procedures for preparing these acrylate and methacrylate esters of epoxide resins is described in U. S. Patent No. 3,377,406 incorporated by reference.

The acrylate or methacrylate esters are blended with the epoxide resins in the weight ratio of about 5 to about 100 parts of ester for each 100 parts of epoxide resin.

Of the amine curing agents known to be effective in curing a vicinal epoxy resin, preferred curing agents in accordance with the instant invention are the polyoxyalkylene containing amine compounds. A preferred class of polyoxyalkylene polyamines is of the formula:

$$R-[(OCH_2\underset{\substack{|\\ X}}{CH})_nOCH_2CH(CH_3)-NH_2]_r$$

wherein X is hydrogen, methyl or ethyl radical; R is the nucleus of an oxyalkylation susceptible polyhydric alcohol containing 2 to 12 carbon atoms and 2 to 8 hydroxyl groups and; n is a number from 1 to about 15 and r is a number from 2 to 4.

The most preferred polyoxyalkylene polyamines are a polyoxypropylene diamine having a molecular weight of about 230 or a triamine of molecular weight about 400. These products are available under the tradename JEFFAMINE® D-230 and JEFFAMINE® T-403 from Texaco Chemical Co. Their use as curing

agents is described in U. S. Patent No. 4,189,564.

JEFFAMINE® D-230 is represented by the formula:

$H_2NCH(CH_3)CH_2\text{-}[OCH_2CH(CH_3)]_xNH_2$

wherein x averages 2.6.

JEFFAMINE® T-403 is represented by the formula:

$$\begin{array}{l} \quad\quad\quad\quad\; CH_2[OCH_2CH(CH_3)]_xNH_2 \\ \quad\quad\quad\quad\;\; | \\ CH_3CH_2\text{-}C\text{-}CH_2[OCH_2CH(CH_3)]_yNH_2 \\ \quad\quad\quad\quad\;\; | \\ \quad\quad\quad\quad\; C_2[OCH_2CH(CH_3)]_zNH_2 \end{array}$$

wherein x + y + z averages 5.3.

The reactive amine accelerators of the instant invention are piperazine compounds which are described, for example, in U. S. Patent No. 3,875,072 and U. S. Patent No. 4,528,345 to Waddill incorporated herein by reference. The preferred accelerator is piperazine itself. N-aminoethylpiperazine is shown in the Example to produce good coatings.

The piperazine compound is incorporated in an amount which will ensure a maximum level of primary amine reaction but give a reaction product which is not too viscous to handle. The greater the ratio of accelerator to acrylate ester, the less primary amine is reacted. However, a large excess of epoxy resin will result in a very viscous product or even a gel which is undesirable. However, excess piperazine compound is undesirable because of extraneous reactions. Accordingly, the instant coatings are formulated with piperazine compound in an approximate equivalence with the acrylate ester.

This invention is shown by way of Example.

## EXAMPLE 1

Coating Properties: Cure of Cycloaliphatic Epoxy Resin/Trimethylolpropane Triacrylate Blends with JEFFAMINE® T-403/Piperazine Curative Systems

| Formulation, pbw | 6213- 4A | 6213- 4B | 6213- 56A | 6213- 66A | 6213- 66B | 6253- 19E |
|---|---|---|---|---|---|---|
| Cycloaliphatic epoxy resin (5) | 100 | 90 | 90 | 90 | 80 | 70 |
| TMP triacrylate | - | 10 | 10 | 10 | 20 | 30 |
| JEFFAMINE® T-403 | 34 | 39 | 30.6 | 30.6 | 27.2 | 23.8 |
| Piperazine | - | - | 4.4 | 4.4 | 8.8 | 13.2 |
| Solvent | - | - | 10 (1) | 15 (2) | 30 (2) | 45 (2) |
| **Coating Properties** | | | | | | |
| Drying time, 152μm (6 mil) film | | | | | | |
| Set-to-touch, hrs | 21.4 | 12.2 | 1.1 | 1.5 | <0.1 | <0.1 |
| Surface-dry, hrs | 25.8 | 14.6 | 2.3 | 2.8 | 0.5 | 0.8 |
| Thru-dry, hrs | 31.2 | ~36 | >25 | >24 | 3.4 | - |
| Pencil hardness after: | | | | | | |
| 24 hrs, ~25°C | >3B (3) | >3B (3) | >3B (3) | >3B (3) | >3B (3) | HB (4) (7) |
| 48 hrs, " | - | - | H (4) | HB (4) | HB (6) | F-H (4) |
| 72 hrs, " | 2B | H | 2H (4) | H (4) | H (4) | 2H (4) |
| 7 day, " | HB | 2B | H | HB (4) | HB (4) | 2H (4) |
| 24 hrs ~25°C, 1 hr 80°C, 1 hr 125°C | HB | B | H | F-H | F | F |
| Gardner impact, JOULES (in. lbs) to fail after: | | | | | | |
| 24 hrs, ~25°C | <— 18 (160) 18 (160) —> | | | | | |
| 48 hrs, | <— 18 (160) 18 (160) —> | | | | | |
| (dir./rev.) 72 hrs, ~25°C | <— 18 (160) 18 (160) —> | | | | | |
| 7 days, ~25°C | <— 18 (160) 18 (160) —> | | | | | |
| 24 hrs, ~25°C, 1 hr 80°, 1 hr, 125°C | <— 18 (160) 18 (160) —> | | | | | |

1 Solvent: n-Butanol; 2 Solvent: 50/50 blend; ethanol/n-butanol;
3 Coating soft, easily marred;
4 Indented without permanent marring with softer leads;
5 EPONEX® 151, Shell Chemical; 6 Tacky, undercured surface;
7 Slightly tacky surface.

Coating of cycloaliphatic epoxy and JEFFAMINE® T-403 cured very slowly to form soft, flexible film. Addition of trimethylolpropane (TMP) triacrylate improved drying times was somewhat but tack-free time still lengthy and the coatings were soft. Addition of piperazine in an amount equivalent to the acrylate material present in the formulation shortened drying time considerably, particularly when the acrylate was 20-30% of total resin amount. Such coatings exhibited rapid curing, formed initially soft, flexible coatings which hardened rapidly to tough, blemish-free, high gloss flexible coatings that were difficult to mar.

## EXAMPLE 2

Coatings Properties: Curing Cycloaliphatic Epoxy Resin/TMP Triacrylate Blends with JEFFAMINE® T-403 and Other, More Reactive Amines

| Formulation: 6253- | -58A | -58B | -58C | -58D | -59A | -59B | -59C | -59D |
|---|---|---|---|---|---|---|---|---|
| Cycloaliphatic epoxy resin (7) | 80 | 80 | 80 | 80 | 80 | 80 | 80 | 80 |
| TMP triacrylate | 20 | 20 | 20 | 20 | 20 | 20 | 20 | 20 |
| JEFFAMINE® T-403 | 27.2 | 27.2 | 27.2 | 27.2 | 27.2 | 27.2 | 27.2 | 27.2 |
| AEP[8] | 8.7 | - | - | - | - | - | - | - |
| BAPP[9] | - | 10.1 | - | - | - | - | - | - |
| TETA[10] | - | - | 4.9 | - | - | - | - | - |
| IPDA[11] | - | - | - | 8.6 | - | - | - | - |
| 1,2-DACH[12] | - | - | - | - | 5.8 | - | - | - |
| MIBPA[13] | - | - | - | - | - | 7.3 | - | - |
| BAEE[14] | - | - | - | - | - | - | 5.3 | - |
| JEFFAMINE® EDR-148 | - | - | - | - | - | - | - | 7.5 |
| **Coating Properties** (152 µm) | | | | | | | | |
| Drying time, (6 mil) film | | | | | | | | |
| Set-to-touch, hrs | 2.0 | 1.8 | 2.6 | 12.4 | 10.4 | 3.0 | 5.8 | 2.4 |
| Surface-dry, hrs | 3.6 | 2.5 | 4.0 | 13.8 | 13.7 | 4.2 | 7.2 | 4.4 |
| Thru-dry, hrs | 5.0 | 8.9 | 6.0 | >36 | >30 | 7.7 | >28 | 15.2 |
| Pencil hardness after: | | | | | | | | |
| 24 hrs, ~25°C | >3B[1 3] | >3B[2 3] | >3B[1 3] | >3B[1 4] | >3B[4] | >3B[3 5] | >3B[4] | >3B[4 5] |
| 48 hrs, " | B[1 3] | HB[2] | 3B[1 3] | 2B[4] | >3B[4] | B | 3B[4] | 2B[3] |
| 72 hrs, " | F[1 6] | H[2] | 2B[1] | HB-F[1,3] | B | F[3] | HB-F | F[5] |
| 7 days, " | F[1] | F[2] | F[1] | F[1 6] | F-H[1] | F[3] | H[3 6] | F-H[5 6] |
| 24 hrs ~25°C, 1 hr 80°C 1 hr 125°C | HB[1] | F[2] | HB[2] | 2B-B[1] | HB[1] | F[2] | 2B-B[5] | HB[5] |
| Gardner impact, JOULES (in . lbs) to fail after: | | | | | | | | |
| 24 hrs, ~25°C 48 hrs, " | <—— 18 (160) 18 (160) ——> | | | | | | | |
| (dir./rev.) 72 hrs, ~25°C | <—— 18 (160) 18 (160) ——> | | | | | | | |
| 7 days, ~25°C | <—— 18 (160) 18 (160) ——> | | | | | | | |
| 24 hrs ~25°C, 1 hr | <—— 18 (160) 18 (160) ——> | | | | | | | |
| 80°C, 1 hr, 125°C | <—— 18 (160) 18 (160) ——> | | | | | | | |

[1]High gloss finish without blemishes; [2]Dull, low gloss finish; no blush; [3]Slightly tacky surface; [4]Tacky, undercured surface; [5]Slightly blemished; [6]Indented without marring with softer leads: [7]EPONEX® 151 (Shell Chemical); [8]AEP = N-Aminoethylpiperazine; [9]BAPP = Bis(aminopropyl)piperazine; [10]TETA = Triethylenetetramine; [11]IPDA = Isophoronediamine; [12]1,2-DACH = 1,2-diaminocyclohexane; [13]MIBPA = Methyliminobispropylamine; [14]BAEE = Bis(aminoethyl)ether.
JEFFAMINE® EDR-148 - triethylene glycol diamine

A number of quite reactive amines were added to a cycloaliphatic epoxy resin/TMP triacrylate blend cured with JEFFAMINE® T-403. The amount of reactive amine added was equivalent to the amount of triacrylate present in the formulation. Addition of only a few of the reactive amines (AEP, BAPP, TETA, MIBPA) resulted in shortened drying times. Of these, only AEP and TETA produced blemish-free decorative coatings. The formulation containing TETA produced a dull, lusterless, blemished coating when heat cured. Of all of the reactive amines tested, only AEP and piperazine (Example 1) resulted in a totally acceptable coating.

## EXAMPLE 3

Coatings Properties: Cures of Cycloaliphatic Epoxy Resin/ TMP Triacrylate Blends with JEFFAMINE® D-230/Piperazine Curative Systems

| Formulation: 6253- | -55A | -55B | -55C | -55D | 55E |
|---|---|---|---|---|---|
| Cycloaliphatic epoxy resin(6) | 100 | 90 | 90 | 80 | 70 |
| TMP triacrylate | - | 10 | 10 | 20 | 30 |
| JEFFAMINE® D-230 | 24.7 | 28.1 | 22.2 | 19.7 | 17.3 |
| Piperazine | - | - | 4.4 | 8.8 | 13.2 |
| Solvent (7) | - | - | 15 | 30 | 45 |
| **Coating Properties** | | | | | |
| Drying time, 152 µm (6 mil) film | | | | | |
| Set-to-touch, hrs | 32.8 | 33.7 | 0.2 | <0.1 | <0.1 |
| Surface-dry, hrs | 44.7 | 39.9 | 0.9 | 0.3 | 0.4 |
| Thru-dry, hrs | ~54.4 | 59.8 | >24 | 0.3 | 0.4 |
| Pencil hardness after: | | | | | |
| 24 hrs, ~25°C | (3) | (3) | >3B(4) | >3B(4) | >3B(4) |
| 48 hrs, " | 3B | >3B(4) | 2B(5) | H(5) | H(5) |
| 72 hrs, " | 3B | 2B(5) (6) | H(5) | H-2H(5) | H-2H(5) |
| 7 days, " | B(1) | H(5) | H(5) | F(5) | H-2H(5) |
| 24 hrs ~25°C, 1 hr 80°, 1 hr 125°C | F(1) | 2B(1) | HB-F(1) | HB-F(2) | HB(2) |
| Gardner impact, JOULES (in. lbs) to fail after: | | | | | |
| 24 hrs, ~25°C | (3) | (3) | | | |
| 48 hrs, " | 18(160) ~ 16(140) | <— | 18(160) 18(160) | | —> |
| (dir./rev.) 72 hrs, ~25°C | <— | | 18(160) 18(160) | | —> |
| 7 days, ~25°C | <— | | 18(160) 18(160) | | —> |
| 24 hrs ~25°C, 1 hr 80°C, 1 hr, 125°C | <— | | 18(160) 18(160) | | —> |

[1]High gloss, unblemished surface; [2]Slightly wrinkled surface; [3]Could not test; coating soft, tacky, incompletely cured; [4]Coating soft, tacky, weak, undercured; [5]Indented without marring with softer leads; [6]EPONEX® 151 (Shell Chemical Co.). [7]50/50 pbw. blend of n-butanol, ethanol

The curing of a cycloaliphatic epoxy resin with JEFFAMINE® D-230 resulted in excessively long film drying times. Addition of TMP triacrylate did not improve drying, probably because the reaction product of acrylate and JEFFAMINE® D-230 was quite soft, with a plasticizing effect. Addition of TMP triacrylate did not improve drying. Addition of piperazine to a system containing both epoxy resin and acrylate, even though a solvent was necessary, resulted in rapid gellation and rapid development of acceptable coating properties.

## EXAMPLE 4A

### Accelerated Exposure Testing of Clear Coatings

| Formulation: 6253- | -65A | -65B | -65C | -65D | -56A | -56B |
|---|---|---|---|---|---|---|
| Liquid DGEBA resin[4] | 100 | 80 | - | - | - | - |
| Cycloaliphatic epoxy resin[5] | - | - | 100 | 80 | 80 | 80 |
| TMP Triacrylate | - | 20 | - | 20 | 20 | 20 |
| JEFFAMINE® T-403 | 42 | 50.8 | 34 | 43.4 | 27.2 | 27.2 |
| Piperazine | - | - | - | - | 8.8 | - |
| AEP[6] | - | - | - | - | - | 8.7 |
| Solvent[1] | - | - | - | - | 30 | - |
| **Yellowing Properties:[2]** | | | | | | |
| △Y.I. after Q-U-V[(3)] exposure for: 24 hrs | 33.4 | 20.2 | 11.7 | 10.6 | 6.7 | 8.8 |
| 48 hrs | 40.8 | 25.4 | 23.0 | 14.3 | 10.3 | 12.7 |

[1]Solvent: 50/50 pbw mixture of n-butanol/ethanol; [2]Clear coating of uniform thickness (~6 mil) thick) applied to white tile; [3]Accelerated weathering tester - full light, no water; temperature of cabinet ~45°C; Y.I. = yellowing index (ASTM D-1925) determined after Q-U-V exposure; [4]Epoxy equivalent weight ~185, EPON® 828 (Shell); [5]EPONEX® 151 (Shell); [6]AEP = N-aminoethylpiperazine.

Epoxy resin systems based on liquid bisphenol A resin (aromatic; unsaturated) yellowed rapidly and significantly when subjected to accelerated exposure. The presence of an acrylate as a partial replacement of bisphenol A resin reduced yellowing somewhat. A cycloaliphatic epoxy resin system yellowed to a lesser degree than the bisphenol A resin system. Addition of acrylate as a resin replacement had little effect on resin yellowing. Addition of piperazine or AEP produced a rapid curing formulation with even better yellowing (or non-yellowing) characteristics.

EXAMPLE 4B

| Formulation: 6253- | -56A | -56B | -56D | -56C | -57A | -57B | -57C | -57D | -57E |
|---|---|---|---|---|---|---|---|---|---|
| Cycloaliphatic epoxy resin[1] | 80 | 80 | 80 | 80 | 80 | 80 | 80 | 80 | 80 |
| TMP triacrylate | 20 | 20 | 20 | 20 | 20 | 20 | 20 | 20 | 20 |
| JEFFAMINE® T-403 | 27.2 | 27.2 | 27.2 | 27.2 | 27.2 | 27.2 | 27.2 | 27.2 | 27.2 |
| Piperazine | 8.8 | - | - | - | - | - | - | - | - |
| AEP[2] | - | 8.7 | - | - | - | - | - | - | - |
| TETA[3] | - | - | 4.9 | - | - | - | - | - | - |
| BAPP[4] | - | - | - | 10.1 | - | - | - | - | - |
| IPDA[5] | - | - | - | - | 8.6 | - | - | - | - |
| 1,2-DACH[6] | - | - | - | - | - | 5.8 | - | - | - |
| MIBPA[7] | - | - | - | - | - | - | 7.3 | - | - |
| BAEE[8] | - | - | - | - | - | - | - | 5.3 | - |
| JEFFAMINE® EDR-148 | - | - | - | - | - | - | - | - | 7.5 |
| Solvent[9] | 30 | - | - | - | - | - | - | - | - |
| **Yellowing Properties** | | | | | | | | | |
| △Y.I. after Q-U-V exposure for: 25 hrs | 6.7 | 8.8 | 7.7 | 16.1 | 9.0 | 4.6 | 7.5 | 6.6 | 5.6 |
| 48 hrs | 10.3 | 12.7 | 11.2[10] | 21.9[11] | 10.5 | 5.6 | 10.2[12] | 9.6[10] | 8.0[10] |

[1]EPONEX® 151 (Shell Chemical Co.); [2]AEP = N-Aminoethylpiperazine; [3]TETA = triethylene tetramine; [4]BAPP = Bis(aminopropyl)piperazine; [5]IPDA = Isophoronediamine; [6]1,2-DACH = 1,2-diaminocyclohexane; [7]MIBPA = Methyliminobispropylamine; [8]BAEE = Bis(aminoethyl)ether; [9]Solvent: 50/50 pbw mixture of n-Butanol/ethanol; [10]Sl. blemished surface; [11]Severely blemished surface; [12]Blemished surface.

A number of the reactive amine systems produced clear coatings that were resistant to yellowing. However, many of these were previously ruled out for various reasons; i.e., slow drying, blemished surface, etc., so that only piperazine (in solution) or AEP were considered useful for the intended purpose.

TABLE OF TEST METHODS

| | |
|---|---|
| Pencil hardness (cure) | ASTM D-3363-74 |
| Gardner impact | ASTM D-2794-69 |
| Yellowing index | ASTM D-1925 |

While particular embodiments of the invention have been described, it is well understood that the invention is not limited thereto since modifications may be made. It is therefore contemplated to cover by the appended claims any such modifications as fall within the spirit and scope of the claims.

## Claims

**1.** An epoxy resin coating composition characterised in that it comprises the cured reaction product of:

A. a cycloaliphatic epoxy resin containing at least 1.8 reactive 1,2-epoxy groups per molecule, mixed with an acrylate ester, in a weight ratio of epoxy resin:acrylate ester of 2:1 to 10:1; reacted with

B. a curing amount of a polyether polyamine of the formula

(a) $NH_2CH(CH_3)CH_2[OCH_2CH(CH_3)]_xNH_2$

wherein x ranges from 2 to 6; or of the formula

(b)

$$CH_2[OCH_2CH(CH_3)]_xNH_2$$
$$CH_3CH_2-C-CH_2[OCH_2CH(CH_3)]_yNH_2$$
$$CH_2[OCH_2CH(CH_3)]_zNH_2$$

wherein x + y + z ranges from 4 to 6; said polyether polyamine being mixed with piperazine or N-aminoethylpiperazine in approximately molar equivalence with the acrylate ester.

**2.** A composition according to claim 1 characterised in that the acrylate ester is trimethylolpropane triacrylate.

**3.** A composition according to claim 1 or claim 2 characterised in that the cycloaliphatic epoxy resin is a saturated bisphenol A resin.

**4.** A composition according to any of the preceding claims characterised in that the epoxy resin: acrylate ester weight ratio is 10:3 to 10:2.

**5.** An epoxy resin coating composition comprising the cured reaction product of:

A. a cycloaliphatic epoxy resin containing at least 1.8 reactive 1,2-epoxy groups per molecule, mixed with trimethylolpropane triacrylate in a weight ratio of epoxy resin: triacrylate of 10:3 to 10:2; reacted with

B. a curing amount of a polyether polyamine of the formula

(a) $NH_2CH(CH_3)CH[OCH_2CH(CH_3)]_xNH_2$

wherein x ranges from 2 to 6; or of the formula

(b)

$$CH_2[OCH_2CH(CH_3)]_xNH_2$$
$$CH_3CH_2-C-CH_2[OCH_2CH(CH_3)]_yNH_2$$
$$CH_2[OCH_2CH(CH_3)]_zNH_2$$

wherein x + y + z ranges from 4 to 6; said polyether polyamine being mixed with piperazine in approximate molar equivalence with the triacrylate.

## Revendications

**1.** Composition de revêtement à base de résine époxy, caractérisée en ce qu'elle comprend le produit réactionnel durci de :

A. une résine époxy cycloaliphatique contenant au moins 1,8 groupe réactif époxy-1,2 par molécule, mélangée avec un ester acrylate, dans un rapport en poids de résine époxy/ester acrylate de 2/1 à 10/1; ayant réagi avec

B. une quantité d'une polyéther-polyamine servant à durcir, de la formule

(a) $NH_2CH(CH_3)CH_2[OCH_2CH(CH_3)]_xNH_2$

dans laquelle x varie de 2 à 6; ou de la formule

(b) 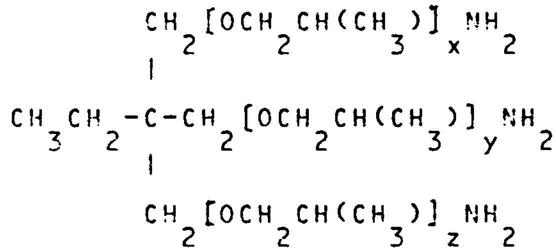

dans laquelle x + y + z varie de 4 à 6; ladite polyéther-polyamine étant mélangée avec de la pipérazine ou de la N-aminoéthylpipérazine en équivalence molaire approximative avec l'ester acrylate.

2. Composition selon la revendication 1, caractérisée en ce eue l'ester acrylate est le triméthylolpropane triacrylate.

3. Composition selon la revendication 1 ou la revendication 2, caractérisée en ce que la résine époxy cycloaliphatique est une résine au bisphénol A saturée.

4. Composition selon l'une quelconque des revendications précédentes, caractérisée en ce que le rapport en poids de résine époxy/ester acrylate va de 10/3 à 10/2.

5. Composition de revêtement à base de résine époxy, comprenant le produit réactionnel durci de :
A. une résine époxy cycloaliphatique contenant au moins 1,8 groupe réactif époxy-1,2 par molécule, mélangée avec du triméthylolpropane triacrylate dans un rapport en poids de résine époxy/triacrylate de 10/3 à 10/2; ayant réagi avec
B. une quantité d'une polyéther-polyamine servant à durcir, de la formule

(a) $NH_2CH(CH_3)CH_2[OCH_2CH(CH_3)]_xNH_2$

dans laquelle x varie de 2 à 6; ou de la formule

(b) 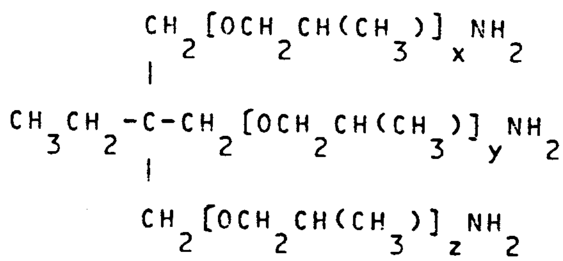

dans laquelle x + y + z varie de 4 à 6; ladite polyéther-polyamine étant mélangée avec de ta pipérazine en équivalence molaire approximative avec le triacrylate.

## Patentansprüche

1. Zusammensetzung eines Anstrichs auf der Basis eines Epoxidharzes, dadurch gekennzeichnet, daß sie das ausgehärtete Reaktionsprodukt aus:
A. einem cycloaliphatischen Epoxidharz, das wenigstens 1,8 reaktive 1,2-Epoxidgruppen pro Molekül enthält, vermischt mit einem Acrylatester, in einem Gewichtsverhältnis von Epoxidharz: Acrylatester 2:1 bis 10:1; umgesetzt mit
B. einer aushärtenden Menge eines Polyetherpolyamins mit der Formel

(a) $NH_2CH(CH_3)CH_2[OCH_2CH(CH_3)]_xNH_2$

in der x im Bereich von 2 bis 6 liegt; oder mit der Formel

(b) 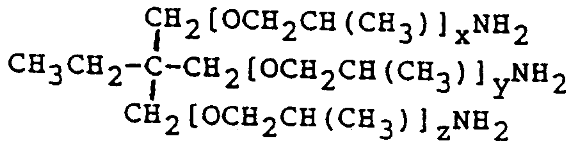

in der x + y + z im Bereich von 4 bis 6 liegt; wobei besagtes Polyetherpolyamin in annähernd molarer Äquivalenz mit dem Acrylatester mit Piperazin oder N-Aminoethylpiperazin vermischt ist,
umfaßt.

**2.** Zusammensetzung nach Anspruch 1, dadurch gekennzeichnet, daß der Acrylatester Trimethylolpropantriacrylat ist.

**3.** Zusammensetzung nach Anspruch 1 oder Anspruch 2, dadurch gekennzeichnet, daß das cycloaliphatische Epoxidharz ein gesättigtes Bisphenol A-Harz ist.

**4.** Zusammensetzung nach einem der vorangehenden Ansprüche, dadurch gekennzeichnet, daß das Gewichtsverhältnis von Epoxidharz: Acrylatester 10:3 bis 10:2 beträgt.

**5.** Zusammensetzung für einen Anstrich auf der Basis eines Epoxidharzes, die das ausgehärtete Reaktionsprodukt aus:
A. einem cycloaliphatischen Epoxidharz, das wenigstens 1,8 reaktive 1,2-Epoxidgruppen pro Molekül enthält, vermischt mit Trimethyloltriacrylat in einem Gewichtsverhältnis von Epoxidharz: Triacrylat von 10:3 bis 10:2; umgesetzt mit
B. einer aushärtenden Menge eines Polyetheramins mit der Formel

(a) $NH_2CH(CH_3)CH[OCH_2CH(CH_3)]_xNH_2$,

in der x im Bereich von 2 bis 6 liegt; oder mit der Formel

(b) 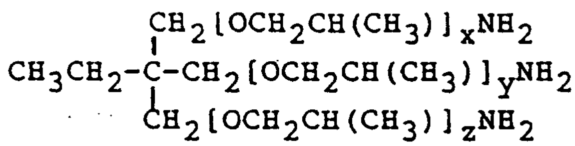

in der x + y + z im Bereich von 4 bis 6 liegt; wobei besagtes Polyetherpolyamin in annähernd molarer Äquivalenz mit dem Triacrylat mit Piperazin vermischt ist,
umfaßt.